# EUROPÄISCHE PATENTANMELDUNG

(11) **EP 2 923 768 A1**
(43) Veröffentlichungstag der Anmeldung: **30.09.2015**
(21) Anmeldenummer: 14161317.4
(22) Anmeldetag: 24.03.2014
(51) Int. Cl.: B03D 1/02, B03D 1/14, C02F 1/24

(54) **Mikroflotationsanlage mit einer Entspannungsventilanordnung und Verfahren zum Betreiben einer Mikroflotationsanlage**

(71) Anmelder: Damann, Roland, 33106 Paderborn (DE)
(72) Erfinder: Damann, Roland, 33106 Paderborn (DE)
(74) Vertreter: Hauck Patentanwaltspartnerschaft mbB

(57) **Zusammenfassung**

Mikroflotationsanlage mit
• einem Reaktorbehälter (12), der einen Wasserzulauf (14) aufweist und dazu ausgebildet ist, über den Wasserzulauf (14) zugeführtes Wasser unter erhöhtem Druck mit einem Gas anzureichern und das so gebildete Dispersionswasser an einem Dispersionswasserauslauf (18) zur Verfügung zu stellen,
• einem Flotationsbecken (22), das einen Dispersionswasserzulauf (26) aufweist, und
• einer Entspannungsventilanordnung (28), über die der Dispersionswasserauslauf (18) mit dem Dispersionswasserzulauf (26) verbunden ist,
• einer Messeinrichtung (38), die dazu ausgebildet ist, mindestens einen der folgenden Parameter des über den Wasserzulauf zuzuführenden Wassers zu messen: Temperatur, pH-Wert, Salzgehalt, Fett-/Ölgehalt, chemischer Sauerstoffbedarf (CSB), Färbung, Trübung, Redoxpotenzial, Sauerstoffgehalt, Feststoffgehalt
• einer Verstelleinrichtung (24), mit der eine Durchflussmenge der Entspannungsventilanordnung einstellbar ist, und
• einer elektronischen Steuerung (36), die mit der Messeinrichtung (38) und der Verstelleinrichtung (28) verbunden und dazu ausgebildet ist, die Durchflussmenge in Abhängigkeit eines von der Messeinrichtung gemessenen Parameters einzustellen.

## Beschreibung

Die Erfindung betrifft eine Mikroflotationsanlage mit einem Reaktorbehälter, in dem Wasser unter erhöhtem Druck mit einem Gas angereichert wird. Das so gebildete Dispersionswasser wird über eine Entspannungsventilanordnung einem Flotationsbecken zugeführt. Bei der Entspannung des Dispersionswassers bilden sich in dem Flotationsbecken Mikroblasen, die langsam aufsteigen und sich dabei an Verunreinigungen anlagern und diese an die Oberfläche des Flotationsbeckens transportieren. Solche Mikroflotationsanlagen sind zur Reinigung der unterschiedlichsten Abwässer geeignet und zeichnen sich grundsätzlich durch einen weitgehend wartungsfreien und kostengünstigen Betrieb aus.

Ein Kostenfaktor für den Betrieb der Mikroflotationsanlagen ist der Energiebedarf für die Herstellung des Dispersionswassers. Hierzu muss eine ausreichende Gasmenge in das Wasser eingebracht werden und es muss ein erhöhter Druck erzeugt und aufrechterhalten werden. Die Menge an Mikroblasen, die zur Reinigung des Abwassers erforderlich ist, hängt von der Beschaffenheit des Abwassers ab.

Bei bekannten Mikroflotationsanlagen kann die Menge des dem Flotationsbecken zugeführten Dispersionswassers durch eine einmalige Einstellung eines Entspannungsventils justiert werden. Ein Richtwert lautet, dass für eine zufriedenstellende Reinigung etwa 10 Liter Dispersionswasser pro Kilogramm Feststoffgehalt des Abwassers zugeführt werden müssen. Unberücksichtigt bleibt, wieviel Gas tatsächlich in dem über das Entspannungsventil zugeführten Dispersionswasser gelöst ist.

Davon ausgehend ist es die Aufgabe der Erfindung, eine Mikroflotationsanlage zur Verfügung zu stellen, die besonders energieeffizient arbeitet, sowie ein Verfahren zum Betreiben einer solchen Mikroflotationsanlage.

Diese Aufgabe wird gelöst durch die Mikroflotationsanlage mit den Merkmalen des Anspruchs 1. Vorteilhafte Ausgestaltungen sind in den sich anschließenden Unteransprüchen angegeben.

Die Mikroflotationsanlage hat
- einen Reaktorbehälter, der einen Wasserzulauf aufweist und dazu ausgebildet ist, über den Wasserzulauf zugeführtes Wasser unter erhöhtem Druck mit einem Gas anzureichern und das so gebildete Dispersionswasser an einem Dispersionswasserauslauf zur Verfügung zu stellen,
- ein Flotationsbecken, das einen Dispersionswasserzulauf aufweist,
- eine Entspannungsventilanordnung, über die der Dispersionswasserauslauf mit dem Dispersionswasserzulauf verbunden ist,
- eine Messeinrichtung, die dazu ausgebildet ist, mindestens einen der folgenden Parameter des über den Wasserzulauf zuzuführenden Wassers zu messen: Temperatur, pH-Wert, Salzgehalt, Fett-/Ölgehalt, chemischer Sauerstoffbedarf, Färbung, Trübung, Redoxpotential, Sauerstoffgehalt, Feststoffgehalt,
- eine Verstelleinrichtung, mit der eine Durchflussmenge der Entspannungsventilanordnung einstellbar ist, und
- eine elektronische Steuerung, die mit der Messeinrichtung und der Verstelleinrichtung verbunden und dazu ausgebildet ist, die Durchflussmenge in Abhängigkeit eines von der Messeinrichtung gemessenen Parameters einzustellen.

Bei dem Gas kann es sich insbesondere um Luft handeln. In dem Reaktorbehälter wird das Gas in dem Wasser gelöst, im Idealfall, bis eine Sättigungskonzentration erreicht ist. Hierzu kann in dem Reaktorbehälter ein Gaspolster ausgebildet werden, dass kontinuierlich abgearbeitet wird. Das so entstehende Gas-Wasser-Gemisch, also das Wasser mit dem darin gelösten Gas, wird als Dispersionswasser bezeichnet. Durch den erhöhten Druck kann eine relativ große Gasmenge in dem Wasser gelöst werden. Zugleich ermöglicht er eine nachfolgende Entspannung auf den Umgebungsdruck, die zu der erwünschten Mikroblasenbildung führt. Bei geeigneter Prozessführung und Gestaltung der Entspannungsventilanordnung kann das Größenspektrum der Mikroblasen so eingestellt werden, dass ein Großteil der Mikroblasen Durchmesser im Bereich von etwa 20 µm bis etwa 50 µm aufweist, wodurch eine optimale Reinigungswirkung erzielt wird.

Das dem Reaktorbehälter zugeführt Wasser kann beispielsweise einem Klarwasserablauf des Flotationsbeckens entnommen werden, sodass ein Teil des gereinigten Abwassers für die Herstellung des Dispersionswassers eingesetzt wird.

Die Erfindung beruht auf der Erkenntnis, dass die Menge des dem Flotationsbecken zugeführten Gases, die naturgemäß der Menge der erzeugbaren Mikroblasen entspricht, nicht nur von der Durchflussmenge, also von der Menge des zugeführten Dispersionswassers, sondern ebenso von der Menge des darin gelösten Gases abhängig ist. Die Löslichkeit des Gases in dem Wasser, also die Menge des Gases pro Mengeneinheit Wasser, bei der die Sättigungskonzentration erreicht ist, hängt dabei von zahlreichen Parametern ab, insbesondere von der Temperatur, dem pH-Wert, dem Salzgehalt, dem Fett-/Ölgehalt, dem chemischen Sauerstoffbedarf (CSB), der Färbung, der Trübung, dem Redoxpotential, dem Sauerstoffgehalt oder dem Gehalt eines sonstigen Gases oder dem Feststoffgehalt (TSS total suspended solids) des Wassers. Beispielsweise nimmt die Löslichkeit des Gases in Wasser in der Regel mit steigender Temperatur ab. Im Wasser gelöste Feststoffe, beispielsweise Salze, können die Löslichkeit des Gases in dem Wasser ebenfalls verringern. Ein veränderlicher Gasgehalt in dem Dispersionswasser führt nicht nur zu einer Änderung der insgesamt in das Flotationsbecken eingebrachten Gasmenge, sondern kann zugleich das angestrebte Größenspektrum der Mikroblasen stören und zu einer inhomogenen Blasenbildung führen. Hierdurch wird die Reinigungswirkung unter Umständen stark beeinträchtigt.

Bei der Erfindung wird mindestens einer der genannten Parameter gemessen und bei der Prozessführung berücksichtigt. Es versteht sich, dass wahlweise mehrere der genannten Parameter von der Messeinrichtung gemessen werden und bei der Ansteuerung der Entspannungsventilanordnung berücksichtigt werden können. Ist beispielsweise auf Grundlage einer relativ hohen Temperatur mit einer geringeren Löslichkeit des Gases in dem Wasser zu rechnen, muss die Durchflussmenge der Entspannungsventilanordnung erhöht werden, sodass eine größere Menge an Dispersionswasser zugeführt werden kann und die Menge des damit zugeführten Gases konstant bleibt. Dadurch kann vermieden werden, dass es unter Betriebsbedingungen, bei denen relativ wenig Gas in dem Wasser gelöst werden kann, zu einer nachlassenden Reinigungswirkung infolge einer zu geringen Menge an Mikroblasen kommt. Gleichzeitig kann verhindert werden, dass bei einer relativ hohen Löslichkeit des Gases in dem Wasser mehr Gas zugeführt wird, als für die angestrebte Reinigungswirkung notwendig. Im Idealfall wird stets exakt diejenige Gasmenge mit dem Dispersionswasser in das Flotationsbecken eingebracht, die für die angestrebte Reinigungswirkung erforderlich ist. Somit wird eine optimale Reinigungsleistung bei minimalem Energieeinsatz erreicht.

In einer Ausgestaltung sind in der elektronischen Steuerung Daten über eine Abhängigkeit der Löslichkeit des Gases in Wasser von dem gemessenen Parameter hinterlegt. Die Daten können beispielsweise in Form von mathematischen Funktionen oder in Tabellenform hinterlegt sein. Die elektronische Steuerung kann auf diese hinterlegten Daten zugreifen und eine auf Grundlage dieser Daten ermittelte Löslichkeit des Gases in dem Wasser bei der Ansteuerung der Entspannungsventilanordnung berücksichtigen.

In einer Ausgestaltung ist die elektronische Steuerung dazu ausgebildet, die Durchflussmenge derart einzustellen, dass die Menge des mit dem Dispersionswasser über den Dispersionswasserzulauf dem Flotationsbecken zugeführten Gases von dem gemessenen Parameter unbeeinflusst bleibt. Auf diese Weise können beispielsweise Schwankungen der Temperatur oder des pH-Werts des Wassers kompensiert werden. Verändert sich ein gemessener Parameter derart, dass sich die Löslichkeit des Gases in dem Wasser um einen bestimmten Prozentsatz erhöht, kann die Durchflussmenge um eben diesen Prozentsatz verringert werden, oder umgekehrt. Auf diese Weise bleibt die Menge des zugeführten Gases konstant. Es versteht sich, dass es in der Praxis kaum möglich ist, den Einfluss eines der Parameter vollständig zu kompensieren. Mit dem "unbeeinflusst bleiben" ist daher nicht nur eine vollständige Kompensation, sondern auch eine fast vollständige Kompensation oder zumindest eine deutliche Verringerung des Einflusses des Parameters gemeint.

In einer Ausgestaltung weist die Entspannungsventilanordnung ein Entspannungsventil mit einem verstellbaren Öffnungsgrad und die Verstelleinrichtung einen Stellantrieb auf, mit dem der Öffnungsgrad verstellbar ist. In diesem Fall wird die Durchflussmenge der Entspannungsventilanordnung durch ein Verstellen des Öffnungsgrades des Entspannungsventils eingestellt. Das Entspannungsventil kann beispielsweise ein Kegelventil sein.

In einer Ausgestaltung weist die Entspannungsventilanordnung eine Vielzahl von Entspannungsventilen auf. Die Entspannungsventile können sämtlich mit dem Dispersionswasserauslauf verbunden sein. Ausgangsseitig können die Entspannungsventile an unterschiedlichen Positionen in das Flotationsbecken führen. Es kann sich um Entspannungsventile mit verstellbarem Öffnungsgrad handeln, wie zuvor beschrieben. Alternativ kann es sich um einfache Entspannungsventile handeln, die lediglich geöffnet oder vollständig abgesperrt werden können. In diesem Fall kann die Durchflussmenge durch die Anzahl der von der elektronischen Steuerung geöffneten bzw. geschlossenen Entspannungsventile gesteuert werden.

In einer Ausgestaltung weist die Messeinrichtung einen Messfühler auf, der in dem Wasserzulauf, in dem Flotationsbecken oder in einem Schmutzwasserzulauf des Flotationsbeckens angeordnet ist. Bei Anordnung des Messfühlers im Wasserzulauf des Reaktorbehälters, also entweder unmittelbar am Reaktorbehälter oder auch davon beabstandet in einer Leitung, die zum Reaktorbehälter führt, können die Eigenschaften des mit dem Gas anzureichernden Wassers am genauesten erfasst werden. Es ist jedoch auch möglich, den Messfühler im Flotationsbecken oder in einem Schmutzwasserzulauf des Flotationsbeckens anzuordnen, weil die dort erfassten Messwerte ebenfalls Aufschluss über die Eigenschaften des dem Reaktorbehälter zugeführten Wassers geben, jedenfalls wenn das dem Reaktorbehälter zugeführte Wasser dem Flotationsbecken, insbesondere einem Klarwasserablauf des Flotationsbeckens, entnommen wird. Beispielsweise wird sich die Temperatur des verunreinigten Wassers im Schmutzwasserzulauf nur unwesentlich von der Temperatur im Wasserzulauf des Reaktorbehälters unterscheiden bzw. wird in bekannter Weise davon abhängig sein, sodass die erfassten Messwerte von der elektronischen Steuerung in geeigneter Weise korrigiert werden können.

In einer Ausgestaltung ist eine weitere Messeinrichtung vorhanden, die dazu ausgebildet ist, einen Feststoffgehalt des Schmutzwassers zu messen, wobei die elektronische Steuerung mit der weiteren Messeinrichtung und mit einer Drucksteuerung des Reaktorbehälters verbunden und dazu ausgebildet ist, den erhöhten Druck in dem Reaktorbehälter in Abhängigkeit von dem mit der weiteren Messeinrichtung gemessenen Feststoffgehalt zu steuern. Die Menge des dem Flotationsbecken zugeführten Gases kann also zusätzlich durch eine Anpassung des Drucks in dem Reaktorbehälter an den Feststoffgehalt des Schmutzwasser angepasst werden.

In einer Ausgestaltung ist dem Flotationsbecken eine steuerbare Räumeinrichtung zugeordnet und die elektronische Steuerung ist dazu ausgebildet, eine Räumleistung der Räumeinrichtung in Abhängigkeit von dem gemessenen Feststoffgehalt zu steuern. Die Menge des von der Räumeinrichtung zu entfernenden Flotats hängt von dem Feststoffgehalt des Schmutzwassers ab. Es ist daher zweckmäßig, die Räumleistung, beispielsweise die Geschwindigkeit einer Bewegung der Räumeinrichtung, an den Feststoffgehalt anzupassen. Auch diese Maßnahme trägt dazu bei, die Mikroflotationsanlage besonders energieeffizient zu betreiben.

In einer Ausgestaltung ist die elektronische Steuerung dazu ausgebildet, die Menge des von einer Flockungsmittelzuführeinrichtung zugeführten Flockungsmittels in Abhängigkeit von dem gemessenen Feststoffgehalt zu steuern. Die Flockungsmittelzuführeinrichtung kann beispielsweise an einem Schmutzwasserzulauf des Flotationsbeckens angeordnet sein. Durch die Anpassung der Menge des Flockungsmittels an den Feststoffgehalt kann das Flockungsmittel besonders sparsam dosiert werden.

Die oben genannte Aufgabe wird ebenfalls gelöst durch das Verfahren mit den Merkmalen des Anspruchs 10. Vorteilhafte Ausgestaltungen sind in den sich anschließenden Unteransprüchen angegeben.

Das Verfahren dient zum Betreiben einer Mikroflotationsanlage und weist die folgenden Schritte auf:
- Herstellen von Dispersionswasser durch Anreichern von Wasser mit einem Gas unter erhöhtem Druck,
- Zuführen des Dispersionswassers zu einem Flotationsbecken,
- Messen eines der folgenden Parameter des Wassers: Temperatur, pH-Wert, Salzgehalt, Fett-/Ölgehalt, chemischer Sauerstoffbedarf, Färbung, Trübung, Redoxpotential, Sauerstoffgehalt, Feststoffgehalt,
- Steuern einer Durchflussmenge des dem Flotationsbecken zugeführten Dispersionswassers in Abhängigkeit von dem gemessenen Parameter.

Das Verfahren kann insbesondere zum Betreiben einer Mikroflotationsanlage mit den Merkmalen eines der Ansprüche 1 bis 9 eingesetzt werden. Zur Erläuterung der Merkmale und Vorteile des Verfahrens wird auf die vorstehenden Erläuterungen der Mikroflotationsanlage verwiesen, die entsprechend gelten.

In einer Ausgestaltung wird die Durchflussmenge so gesteuert, dass die Menge des dem Flotationsbecken mit dem Dispersionswasser zugeführten Gases von Änderungen des erfassten Parameters unbeeinflusst bleibt. Hierzu wird auf die vorstehenden Erläuterungen der korrespondierenden Vorrichtungsmerkmale verwiesen.

In einer Ausgestaltung wird ein Feststoffgehalt von dem Flotationsbecken zugeführten Schmutzwasser gemessen und der erhöhte Druck in dem Reaktorbehälter wird in

Abhängigkeit von dem gemessenen Feststoffgehalt gesteuert. Auch hierzu wird auf die vorstehenden Erläuterungen der korrespondierenden Vorrichtungsmerkmale verwiesen.

In einer Ausgestaltung wird eine Räumleistung einer dem Flotationsbecken zugeordneten Räumeinrichtung in Abhängigkeit von dem gemessenen Feststoffgehalt gesteuert. Auch hierzu wird auf die vorstehenden Erläuterungen der korrespondierenden Vorrichtungsmerkmale verwiesen.

Die Erfindung wird nachfolgend anhand eines in einer Figur dargestellten Ausführungsbeispiels näher erläutert.

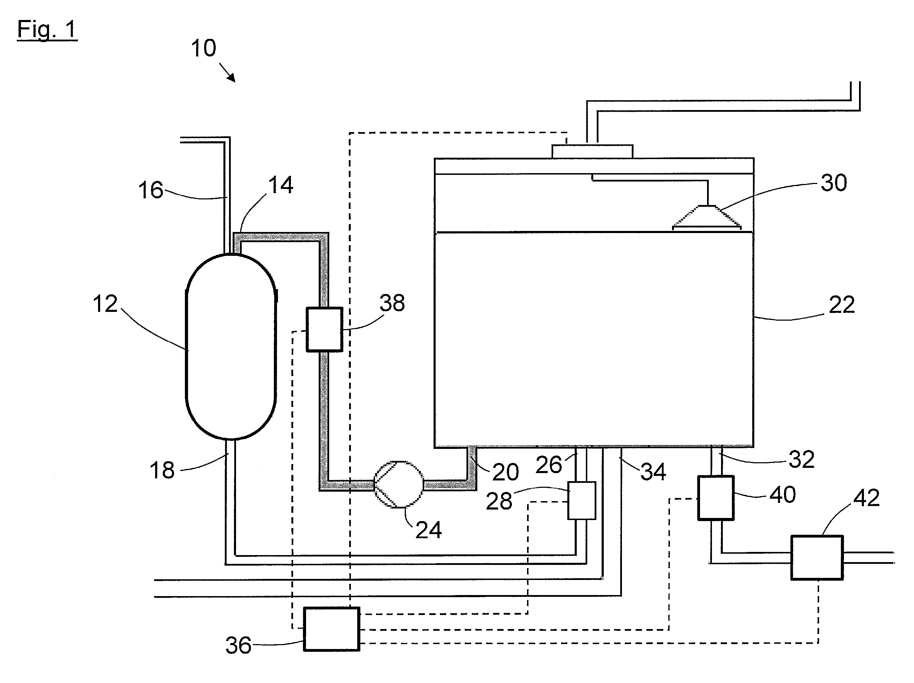

- Fig. 1: zeigt eine erfindungsgemäße Mikroflotationsanlage in einer schematischen Darstellung.

Die Mikroflotationsanlage 10 in Figur 1 weist einen Reaktorbehälter 12 auf, dem über einen Wasserzulauf 14 Wasser zugeführt wird. Über eine Gasleitung 16 wird dem Reaktorbehälter 12 außerdem ein Gas, insbesondere Luft, zugeführt. In dem Reaktorbehälter 12, der unter einem erhöhten Druck steht, beispielsweise im Bereich von 1,5 bar bis 4 bar, wird das Gas mit dem Wasser gemischt, sodass sich das Gas in dem Wasser löst. Das im Idealfall mit dem Gas gesättigte Wasser wird als Dispersionswasser bezeichnet und kann dem Reaktorbehälter 12 über den Dispersionswasserauslauf 18 entnommen werden.

Der Wasserzulauf 14 ist über eine Leitung mit einem Klarwasserauslauf 20 eines Flotationsbeckens 22 verbunden. In der Leitung ist eine Pumpe 24 angeordnet. Das Flotationsbecken 22 weist außerdem einen Dispersionswasserzulauf 26 auf, der über eine Leitung, in der eine Entspannungsventilanordnung 28 angeordnet ist, mit dem Dispersionswasserauslauf 18 des Reaktorbehälters 12 verbunden ist. Auf diese Weise wird das Dispersionswasser dem Flotationsbecken 22 zugeführt.

Beim Durchströmen der Entspannungsventilanordnung 28 kommt es zu einer Druckentspannung und infolgedessen zu einer Bildung von Mikroblasen, die in dem Flotationsbecken 22 langsam aufsteigen, sich dabei an Verunreinigungen anlagern und diese an die Oberfläche tragen. Dort wird das sich auf diese Weise bildende Flotat von einer Räumeinrichtung 30 abgesaugt.

Das zu reinigende Schmutzwasser wird dem Flotationsbecken 22 über einen Schmutzwasserzulauf 32 zugeführt. Das gereinigte Abwasser kann über den weiteren Klarwasserauslauf 34 dem Flotationsbecken 22 zur weiteren Verwendung entnommen werden.

Bei der Erfindung ist eine elektronische Steuerung 36 vorhanden, die einerseits mit einer Messeinrichtung 38 verbunden ist. Die Messeinrichtung 38 weist einen nicht dargestellten Messfühler auf, der im Beispiel im Wasserzulauf 14 des Reaktorbehälters 12 angeordnet ist und dort die Temperatur, den pH-Wert, den Salzgehalt, den Fett-/Ölgehalt und/oder den chemischen Sauerstoffbedarf des dem Reaktorbehälter 12 zuzuführenden Wassers misst.

In der elektronischen Steuerung 36 sind Daten über die Löslichkeit des Gases in Wasser in Abhängigkeit von einem oder mehreren der genannten Parameter hinterlegt. Auf dieser Grundlage ermittelt die elektronische Steuerung 36 eine für die angestrebte Reinigungswirkung optimale Durchflussmenge der Entspannungsventilanordnung 28 und steuert die Entspannungsventilanordnung 28 dementsprechend an. Die elektronische Steuerung 36 ist außerdem verbunden mit einer weiteren Messeinrichtung 40, die im Schmutzwasserzulauf 32 angeordnet ist und dort einen Feststoffgehalt des Schmutzwassers ermittelt. Die von der weiteren Messeinrichtung 40 zur Verfügung gestellten Daten können von der elektronischen Steuerung 36 einerseits zur Steuerung des erhöhten Drucks im Reaktorbehälter 12 herangezogen werden, andererseits zur Steuerung der Räumleistung der Räumeinrichtung 30, die zu diesem Zweck ebenfalls mit der elektronischen Steuerung 36 verbunden ist.

Ebenfalls an dem Schmutzwasserzulauf 32 angeordnet ist eine Flockungsmittelzuführeinrichtung 42. Die Menge des dem Schmutzwasser 32 von der Flockungsmittelzuführeinrichtung 42 zugeführten Flockungsmittels kann von der elektronischen Steuerung 36 ebenfalls in Abhängigkeit des ermittelten Feststoffgehalts gesteuert werden.

### Liste der verwendeten Bezugszeichen

- 10: Mikroflotationsanlage
- 12: Reaktorbehälter
- 14: Wasserzulauf
- 16: Gasleitung
- 18: Dispersionswasserauslauf
- 20: Klarwasserauslauf
- 22: Flotationsbecken
- 24: Pumpe
- 26: Dispersionswasserzulauf
- 28: Entspannungsventilanordnung
- 30: Räumeinrichtung
- 32: Schmutzwasserzulauf
- 34: Klarwasserauslauf
- 36: elektronische Steuerung
- 38: Messeinrichtung
- 40: weitere Messeinrichtung
- 42: Flockungsmittelzuführeinrichtung

## Patentansprüche

1. Mikroflotationsanlage (10) mit
• einem Reaktorbehälter (12), der einen Wasserzulauf (14) aufweist und dazu ausgebildet ist, über den Wasserzulauf (14) zugeführtes Wasser unter erhöhtem Druck mit einem Gas anzureichern und das so gebildete Dispersionswasser an einem Dispersionswasserauslauf (18) zur Verfügung zu stellen,
• einem Flotationsbecken (22), das einen Dispersionswasserzulauf (26) aufweist, und
• einer Entspannungsventilanordnung (28), über die der Dispersionswasserauslauf (18) mit dem Dispersionswasserzulauf (26) verbunden ist, **gekennzeichnet durch**
• eine Messeinrichtung (38), die dazu ausgebildet ist, einen der folgenden Parameter des über den Wasserzulauf (26) zuzuführenden Wassers zu messen: Temperatur, pH-Wert, Salzgehalt, Fett-/Ölgehalt, chemischer Sauerstoffbedarf, Färbung, Trübung, Redoxpotential, Sauerstoffgehalt, Feststoffgehalt,
• eine Verstelleinrichtung, mit der eine Durchflussmenge der Entspannungsventilanordnung (28) einstellbar ist, und
• eine elektronische Steuerung (36), die mit der Messeinrichtung und der Verstelleinrichtung verbunden und dazu ausgebildet ist, die Durchflussmenge in Abhängigkeit eines von der Messeinrichtung gemessenen Parameters einzustellen.

2. Mikroflotationsanlage (10) nach Anspruch 1, **dadurch gekennzeichnet, dass** in der elektronischen Steuerung (36) Daten über eine Abhängigkeit der Löslichkeit des Gases in Wasser von dem gemessenen Parameter hinterlegt sind.

3. Mikroflotationsanlage (10) nach Anspruch 1 oder 2, **dadurch gekennzeichnet, dass** die elektronische Steuerung (36) dazu ausgebildet ist, die Durchflussmenge derart einzustellen, dass die Menge des mit dem Dispersionswasser über den Dispersionswasserzulauf (26) dem Flotationsbecken (22) zugeführten Gases von dem gemessenen Parameter unbeeinflusst bleibt.

4. Mikroflotationsanlage (10) nach einem der Ansprüche 1 bis 3, **dadurch gekennzeichnet, dass** die Entspannungsventilanordnung (28) ein Entspannungsventil mit einem verstellbaren Öffnungsgrad und die Verstelleinrichtung einen Stellantrieb aufweist, mit dem der Öffnungsgrad verstellbar ist.

5. Mikroflotationsanlage (10) nach einem der Ansprüche 1 bis 4, **dadurch gekennzeichnet, dass** die Entspannungsventilanordnung (28) eine Vielzahl von Entspannungsventilen aufweist.

6. Mikroflotationsanlage (10) nach einem der Ansprüche 1 bis 5, **dadurch gekennzeichnet, dass** die Messeinrichtung (38) einen Messfühler aufweist, der in dem Wasserzulauf (26), in dem Flotationsbecken (22) oder in einem Schmutzwasserzulauf (26) des Flotationsbeckens (22) angeordnet ist.

7. Mikroflotationsanlage (10) nach einem der Ansprüche 1 bis 6, **dadurch gekennzeichnet, dass** eine weitere Messeinrichtung (40) vorhanden ist, die dazu ausgebildet ist, einen Feststoffgehalt des Schmutzwassers zu messen, wobei die elektronische Steuerung (36) mit der weiteren Messeinrichtung (40) und mit einer Drucksteuerung des Reaktorbehälters (12) verbunden und dazu ausgebildet ist, den erhöhten Druck in dem Reaktorbehälter (12) in Abhängigkeit von dem mit der weiteren Messeinrichtung (40) gemessenen Feststoffgehalt zu steuern.

8. Mikroflotationsanlage (10) nach einem der Ansprüche 1 bis 7, **dadurch gekennzeichnet, dass** dem Flotationsbecken (22) eine steuerbare Räumeinrichtung (30) zugeordnet und die elektronische Steuerung (36) dazu ausgebildet ist, eine Räumleistung der Räumeinrichtung (30) in Abhängigkeit von dem gemessenen Feststoffgehalt zu steuern.

9. Mikroflotationsanlage (10) nach einem der Ansprüche 1 bis 8, **dadurch gekennzeichnet, dass** eine steuerbare Flockungsmittelzuführeinrichtung (42) vorhanden und die elektronische Steuerung (36) dazu ausgebildet ist, die Menge des von der Flockungsmittelzuführeinrichtung (42) zugeführten Flockungsmittels in Abhängigkeit von dem gemessenen Feststoffgehalt zu steuern.

10. Verfahren zum Betreiben einer Mikroflotationsanlage (10) mit den folgenden Schritten:
• Herstellen von Dispersionswasser durch Anreichern von Wasser mit einem Gas unter erhöhtem Druck,
• Zuführen des Dispersionswassers zu einem Flotationsbecken (22),
• Messen eines der folgenden Parameter des Wassers: Temperatur, pH-Wert, Salzgehalt, Fett-/Ölgehalt, Chemischer Sauerstoffbedarf, Färbung, Trübung, Redoxpotential, Sauerstoffgehalt, Feststoffgehalt,
• Steuern einer Durchflussmenge des dem Flotationsbecken (22) zugeführten Dispersionswassers in Abhängigkeit von dem gemessenen Parameter.

11. Mikroflotationsanlage (10) nach Anspruch 10, **dadurch gekennzeichnet, dass** die Durchflussmenge so gesteuert wird, dass die Menge des dem Flotationsbecken (22) mit dem Dispersionswasser zugeführten Gases von Änderungen des erfassten Parameters unbeeinflusst bleibt.

12. Mikroflotationsanlage (10) nach Anspruch 10 oder 11, **dadurch gekennzeichnet, dass** ein Feststoffgehalt von dem Flotationsbecken (22) zugeführten Schmutzwasser gemessen und der erhöhte Druck in dem Reaktorbehälter (12) in Abhängigkeit von dem gemessenen Feststoffgehalt gesteuert wird.

13. Mikroflotationsanlage (10) nach einem der Ansprüche 10 bis 12, **dadurch gekennzeichnet, dass** eine Räumleistung einer dem Flotationsbecken (22) zugeordneten Räumeinrichtung (30) in Abhängigkeit von dem gemessenen Feststoffgehalt gesteuert wird.

14. Mikroflotationsanlage (10) nach einem der Ansprüche 10 bis 13, **dadurch gekennzeichnet, dass** dem Flotationsbecken (22) ein Flockungsmittel zugeführt wird und eine Menge des zugeführten Flockungsmittels in Abhängigkeit von dem gemessenen Feststoffgehalt gesteuert wird.
